# EUROPEAN PATENT SPECIFICATION

(11) **EP 2 661 009 B1**
(45) Date of publication and mention of the grant of the patent: **14.11.2018**
(21) Application number: 13165783.5
(22) Date of filing: 29.04.2013
(51) Int. Cl.: H04L 5/14

(54) **Dynamic update of transmission settings and robust management communication channel**
Dynamische Aktualisierung von Übertragungseinstellungen und robuster Verwaltungskommunikationskanal
Mise à jour dynamique de paramètres de transmission et canal de communication de gestion robuste

(30) Priority: 30.04.2012 US 201261640674 P; 30.04.2012 US 201261640677 P
(43) Date of publication of application: 06.11.2013
(73) Proprietor: Lantiq Beteiligungs-GmbH & Co. KG, 85579 Neubiberg (DE)
(72) Inventor: Oksman, Vladimir, Morganville, NJ 07751 (US); Strobel, Rainer, 80797 München (DE); Bry, Charles, 82008 Unterhaching (DE)
(74) Representative: Sticht, Andreas

(56) References cited:
- WO-A2-2005/117287
- CA-A1- 2 867 539

## Description

### TECHNICAL FIELD

The present application relates to dynamic updates of transmission settings and to a robust management communication channel e.g. for a DSL data distribution system using time division duplexing. The dynamic update of transmission settings and the robust management communication channel may be used in combination, but may also be used separately from each other.

### BACKGROUND

The Digital Subscriber Line (DSL) technology, during all its history, attempted to increase the bit rate in the aim to deliver more broadband services to the customer. Unfortunately, copper loops deployed from the Central Office (CO) to customer premises (CPE) are rather long and do not allow transmission of data with bit rates more than few Mb/s. Therefore, to increase the customer available bit rates, modern access networks use street cabinets, MDU-cabinets, and similar arrangements have been used: the cabinet is connected to the CO by a high-speed fiber communication line, e.g., gigabit passive optical network (GPON) and installed close to the customer premises. From these cabinets, high-speed DSL systems, such as Very-High-Bit-Rate DSL (VDSL), provide connection to the CPE. The currently deployed VDSL systems (ITU-T Recommendation G.993.2) have range of operation about 1km, providing bit rates in the range of tens of Mb/s. To increase the bit rate of VDSL systems deployed from the cabinet, recent ITU-T Recommendation G.993.5 defined vectored transmission that allows increasing upstream and downstream bit rates up to 100 Mb/s.

Recent trends in the access communications market show that 100 Mb/s is still not sufficient for the close future, and bit rates up to 1 Gb/s are required. This could be only achieved if copper pairs connected the CPE to the fiber backbone are as short as 100m-200m. This requires installation of small street/MDU cabinets, called Distribution Points (DP) that intend to serve a very small number of potential users; usually less than 32. DPs shall allow very flexible installation practices: they should be light and easily installed on a poll or house wall, or basement, without air-conditioning. These requirements bring substantial restrictions of the power consumption of a DP. Besides, DPs (including housings and installed equipment) have to be very inexpensive, i.e., their complexity should be low. One of the techniques that can substantially reduce complexity is using of time-division duplexing, which allows significantly simplifying the AFE and reduce power consumption. In particular, Synchronized Time-Division Duplexing (STDD) is a technique that is currently accepted by ITU-T for a DP.

Besides low complexity and power consumption, important parameters of modern communication systems are efficiency and robustness, sometimes also called "self-healing". For efficiency, the system should be responsive to temporary changes in data traffic associated with users turning on/off different applications, such as web browsing, streamed video, high-quality audio, or fast downloads/uploads. For self-healing, the main are procedures that allow a system to quickly react on changes in the noise environment, including crosstalk noise, impulse noise, background noise, etc. These procedures, currently adopted in conventional DSL systems, are even more important for distribution systems because due to very high bit rates these systems are capable to pass very big amount of information during very short time. Thus, even a short time of poor operation due to changing conditions can provide serious violations in service license agreement (SLA).

In conventional DSL systems, various methods for adaptation of transmission parameters have been developed. For example, a seamless adaptation of transmission parameters in case of noise fluctuation in the line or due to transmit power trim is defined for DSL technologies such as ADSL2 and VDSL2, which use frequency-division duplexing (FDD) in full-duplex mode. Modern DSL uses orthogonal frequency-division multiplexing (OFDM) or discrete multitone modulation (DMT) modulation techniques. The receiver tracks the channel during the transmission and estimates the SNR over each tone. Further, the receiver computes the transmission parameters required for nearly errorless transmission in the estimated SNR conditions and communicates these parameters to the transmitter over an embedded management channel (eoc). The transmitter then applies a procedure of synchronous modification of transmission parameters at both sides, so that no data is lost. For that, the transmitter sends to the receiver a special "marker symbol", indicating to the receiver the beginning of the superframe from which new parameters shall be used. The notable thing here is that parameter exchange is done at protocol layer, and the marker symbol is used merely to indicate the timing when new parameters have to be applied (simultaneously at both sides of the line).

One disadvantage of the seamless adaptation method used in modern DSL is slowness. The process to update parameters takes long time: first estimate the SNR, then communicate the required updates, and execute synchronized change of parameters in the transmitter and the receiver simultaneously. This is mainly because:
1. The parameter exchange needs to be completed at the protocol layer that requires request/confirmation message exchange;
2. The management data is scattered over multiple data frames since it is carried in a small fraction of data frame.
3. The FDD architecture of the DSL provides coordination between US and DS transmissions in frequency but not in time, therefore timing synchronization between upstream and downstream requires additional efforts and requires additional time.

The overall time in current DSL systems is at least 4 superframes, roughly 64ms each.

The method for parameter update used in packet based systems, such as home networking systems, has less delay issue, but it requires sending one or more header symbols - additional symbols to carry transmission parameters for subsequent symbols. Using single symbol may be inefficient for the DP - in DP-based systems the used spectrum is very wide (100-200 Mb/s) which results in thousands of bytes of data communicated in a single symbol. Besides, this solution is not reliable to impulse noise - if header symbol is damaged by the impulse noise, all the transmission is gone.

For implementing such seamless adaptation or other task, management channels are used in conventional DSL systems. For example, the overhead management channel is used in DSL systems to provide functions like performance monitoring (PM), on-line reconfiguration (OLR), switching to various modes of operation and changing control parameters. In vectored systems, such as G.993.5, the embedded operations channel (eoc) is also used to provide a backchannel for error samples that are necessary to adjust the system for changes in topology and noise environment.

Modern DSL system use frequency-division duplexing (FDD), and their eoc is organized by assigning a number of bits in the frame to carry management data. The number of bits determines the bandwidth of the eoc and thus the user can control eoc capabilities in the system. With this, eoc provides a continuous exchange of management data between the CO and the CPE. The bit rates of the eoc usually do not exceed 256 kHz. In synchronized TDD systems, the management channel (VOC) is also multiplexed into the data stream, so that a VOC bytes (usually 2 bytes) are spaced by *I*ₖ data bytes, where *k* is the number of bytes between VOC group #(k-1) and #k. The values of *I*ₖ are negotiated during the initialization to ensure that VOC bytes are sufficiently dispersed in time (i.e., belong to different symbols) and frequency (i.e., are modulated on tones that are in different parts of the spectrum).

In half-duplex systems such as packet-based home networking systems, the receiver communicates the required updates to the transmitter using a special management message or as attached to the acknowledgement packet. Further, the transmitter indicates the actually used transmission parameters (current or updated) in the header symbols of the following packets transmitted to the receiver. Here the header not only indicates the timing of the parameter update but also the actual updated parameter values in order to avoid any potential misalignment.

The main disadvantage of such a conventional management channel is slowness and no synchronization with data transport. The wide band communication medium used for ultra-fast DPs (up to 1 Gb/s) is rather unstable because of regulations do not allow transmission of high power, and RFI and impulse noise are rather strong. Besides, since wide-band transmissions often use FEXT cancellation (vectoring), it is important to get quick updates on changes in crosstalk channels (e.g., due to disconnect of CPE or on/off hooks of the old phone at the CP). In these conditions it's imperative that the system is capable to update transmission parameters for every or almost every transmission, both in upstream and downstream.

Another disadvantage of such a conventional management channel is that it has same or almost same robustness as the data channel. Even in case VOC bytes are distributed in time and frequency, it may be not sufficient and more powerful coding has to be applied. The latter may be easily applicable for high-speed systems because management data is indeed a negligible percentage of information.
Finally, settings of the management channel are sensitive to the updates of transmission parameters. For instance, the number of bytes between VOC group #(k-1) and #k is optimized during the initialization, but may not stay optimum during the showtime because of the bit swapping, and other on-line reconfiguration procedures. In case transmission parameter update fails, the management channel fails together with the data channel, which requires re-initialization of the line.

WO 2005/117287 A2 describes a method for communicating in a wireless network using time division duplex (TDD) protocols. The ratio for uplink and downlink subframes of a physical frame may be dynamically adjusted as traffic stream requirements of the wireless network change. Therefore, there is a continuing need to develop methods of seamless update transmission parameters, for example for STDD systems as mentioned above. Also, in some applications, a more robust management channel may be desirable.

### SUMMARY

The invention is defined by the appended claims. The embodiments that do not fully fall under the scope of the claims have to be interpreted as examples useful for understanding the invention.

### BRIEF DESCRIPTION OF THE DRAWINGS

Fig. 1 schematically shows a system according to an embodiment.
Fig. 2 is a diagram illustrating transmission of data in some embodiments.
Fig. 3 is a schematic diagram illustrating a medium access plan message of some embodiments.
Fig. 4 is a flowchart illustrating a method according to an embodiment.
Fig. 5 is a flowchart illustrating a method according to a further embodiment.
Fig. 6 is a diagram illustrating data transmission using guard times according to an embodiment.
Fig. 7 illustrates a management channel distributed over symbols according to an embodiment.
Fig. 8 illustrates a management channel interleaved with data according to an embodiment.
Fig. 9 illustrates a management channel interleaved with data according to a further embodiment.
Fig. 10 is a diagram illustrating the use of synchronization symbols for a management channel.
Fig. 11 is a flowchart illustrating a method according to an embodiment.

### DETAILED DESCRIPTION

In the following, various embodiments will be described in detail.

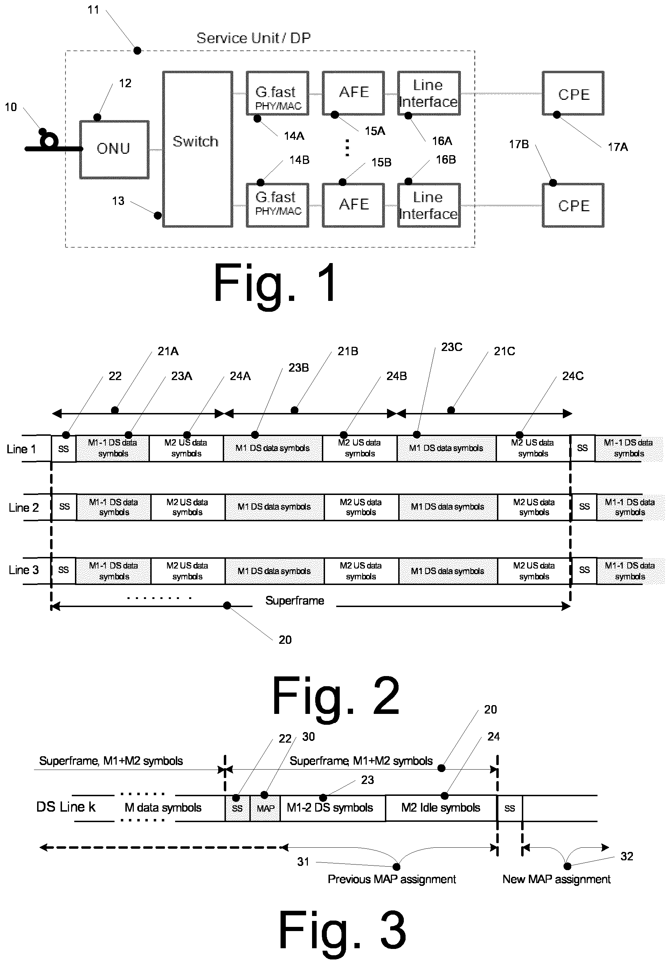

One example for environments where techniques, devices and methods explained in the following may be applied are synchronized time division duplexing (STDD) systems, for example distribution points (DP) or other service units which serve customer premises equipment (CPE). A STDD system, as proposed to be used or being used e.g. in standardized systems, generally is to be understood as a system where a transmission time is divided in transmission time slots (TTS) for an upstream direction and TTS for a downstream direction. In other words, transmission in upstream direction is separated in time from transmission in downstream direction. Furthermore, the transmission is synchronized over a plurality of communication connections, e.g. communication lines like copper lines, such that transmission in downstream direction occurs at essentially the same times on all synchronized lines, and transmission in downstream direction occurs at essentially the same times on all synchronized lines, as will be illustrated later on using an example with respect to Fig. 2. As modulation techniques on the lines, any conventional modulation techniques like DMT or OFDM may be used.

A simplified block diagram of a system employing STDD is shown in Fig. 1. Customer premises equipment 17A, 17B is coupled with a service unit like a distribution point 11, wherein each CPE 17A, 17B is coupled with DP 11 via its own copper line. For each CPE 17A, 17B DP 11 comprises an individual transceiver, showing in a simplified manner as comprising a physical/medium access control layer 14A, 14B (which may be implemented using a processor and/or other entities with data processing capabilities), an analog frontend 15A, 15B and a line interface 16A, 16B, respectively. While the system of Fig. 1 for simplification shows only two customer premises equipments 17A, 17B, the number thereof is not limited and may for example less than 32, and a corresponding number of transceivers may be provided. The physical/medium access control layer 14A, 14B of each transceiver is coupled with a switch 13. Switch 13 is coupled with an optical network unit (ONU) 12 which couples DP 11 with an optical fiber 10. Therefore, DP 11 may receive data via optical fiber 10 from a backbone network and switch the data to the CPE 17A, 17B for which it is intended in a downstream direction. In an upstream direction, DP 11 receives data from CPE 17A, 17B and forwards it to optical fiber 10.

The transmission e.g. between DP 11 and the CPE 17A, 17B uses a basic transmission format which in an embodiment comprises a superframe that includes Sync symbols followed by a number of downstream (DS) data symbols followed by a number of upstream (US) data symbols; the number of DS data symbols, M1, and US data symbols M2 is selected e.g. based on synchronization issues; in one embodiment the expected duration of a superframe is about 20-60 ms. The superframes in all active lines are aligned: sync symbols are sent in the downstream direction, into all lines simultaneously, and all other symbols in different lines are also aligned in time (for vectoring purposes). In some embodiments Sync symbols may be also sent in upstream direction (as one of US symbols). In some embodiments Sync symbols may not be used at all or may be placed in different part of the DS or US transmission. Sync symbols transmitted over different lines in the same direction are aligned in time.

It is to be noted that both upstream and downstream TTS may be used for transmission only partially: the number of symbols of the TTS used for transmission may depend on a required bandwidth and particularly used formatting. As mentioned, the size of the TTS is also configurable at initialization and reconfigurable during showtime as already explained above in detail.

In some embodiments, both US and DS transmissions carry user data and also management information associated with this and following transmissions. Management information associated with a particular transmission allows receivers to identify transmission parameters used for this particular transmission and commands/actions required for the following transmissions.

The described transmission concept is shown in Figure 2. Figure 2 shows a superframe 20 that includes a number of downstream (23A, 23B, 23C)-upstream (24A, 24B, 24C) transmission time slots (TTS). In case of STDD, each pair of downstream-upstream TTS is called a "frame". Each superframe 20 includes integer number of frames (usually 1 or more); the size of superframe 20 and the number of frames may be either pre-defined or may be determined during the initialization. The latter allows setting the latency in the lines based on the expected service requirements. All TTSs include an integer number of symbols.

Superframes and frames are aligned in time over all lines sourced by the DP like DP 11, as shown in Fig. 2. In one embodiment, in all lines all DS TTSs that belong to the same superframe are of the same duration and are aligned by their symbol boundaries. The US TTSs (24A, 24B, 24C in the example shown) that belong to the same superframe are of the same duration and are aligned by their symbol boundaries. In another embodiment, there might be an overlap between US and DS TTS between different lines, assuming that additional per line coordination between actual transmissions over these lines is involved.

In Figure 2, a superframe like superframe 20 includes three frames, each with two TTS - one for DS and one for US. Each DS TTS 23A, 23B, 23C includes M1 symbols, and each US TTS 24Y, 24B, 24C includes M2 symbols. The superframe starts from a sync symbol (SS) 22 that is the first symbol of DS TTS 23A, while the rest of symbols are data symbols. The term "data" in the content of this description is a general term used to identify user data, control or management data, or special purpose symbols such as probe symbols or quiet symbols. In some embodiments, as will be discussed later, a guard time between US and DS transmissions may be used.

The DP like DP 11 of Fig. 1 sends superframes one after another with no gaps. All symbols in a superframe are same duration that depends on the selected value of cyclic prefix. The number of data symbols in the superframe is picked in the way that allows CPE to keep stable synchronization and, if necessary, crosstalk channel estimation by using SS 22.

In the example above, SS 22 are sent only in the downstream direction, however, if necessary, SS can also be introduced in the upstream direction (e.g., for vectoring or other purposes). The time position of SS is aligned over all lines, both in the DS and in the US directions. In some embodiments SS may not be used.

The number of symbols for DS and US transmission (M1 and M2, respectively) is determined during system initialization and may be modified seamlessly during the showtime e.g. by using a protocol described later in this application. This is important to keep the system setup optimized when users change their services and utilized traffic patterns. Similarly, with the protocol can be used to change the size of the frame and the number of frames in a superframe.

While in Fig. 2 transmission for three lines (Line 1, Line 2, Line 3) is shown, this is merely an example, and any number of lines may be used.

Transmission time slots (TTS) are used to assign the transmission time (or transmission opportunity time) for a specific line in US or DS direction (values TTS_{DS}, TTS_{US} denote TTSs for upstream and downstream transmission). A particular transceiver may transmit starting from any symbol of the associated TTS, or skip one or more TTS if no data for transmission is available, or use the TTS to transmit management information, control signals, or dummy bits. The transmitter, however, in embodiments indicates to the receiver from which symbol of the TTS it starts the transmission. In some embodiments, a special indication signal is sent before the first data symbol to be transmitted in the time slot. In other embodiment, idle symbols or dummy bits are sent until first data symbol is available for transmission. Special indication signals may also coordinate transmissions in upstream and downstream lines if the upstream and downstream TTS overlap: a special indication signal may inform the CPE of a particular line that transmission is allowed.

The duration of the US and DS TTSs, e.g. number of symbols M1, M2 are programmable: it is assigned during the initialization based on the expected bandwidth requirements or to a default ratio set by the operator or saved from the previous showtime period, and in embodiments then may be dynamically updated during the showtime e.g. as described in the following to adopt different set of services that are requested by different CPEs. The size of the US and DS TTS determines the ratio between upstream and downstream bandwidth capabilities of the DP and also determine the duration of the upstream-downstream exchange cycle.

As described above, operation of STDD systems like the one shown in Fig. 1, may also require adaptation of the traffic patterns. As described, a DP using STDD schedules transmission over all connected lines so that all upstream (US) transmissions are aligned in time and all downstream (DS) transmissions are aligned in time. This is necessary to avoid near end crosstalk (NEXT) which is destructive for high-frequency transmissions. The ratio between the allowed duration of DS transmission and the allowed duration of US transmission (also called DS/US ratio) shall be the same for all lines connected to the DP. Therefore, this ratio is selected in the way that all lines are provided with the US and DS bandwidth required to support applications chosen by users. Sometime this ratio is a compromise between different users (facilitated by the DP). The important point is that in real installations the required DS/US ratio permanently changes (since people switch applications ON and OFF).

Next, possibilities for adapting the upstream/downstream ratio, for example the ratio between M1 and M2, according to various embodiments will be described in some more detail. While conventionally a re-initialization was necessary for such a change, some of the embodiments described in the following enable a seamless adaptation of this ratio.

In some embodiments, a message, which will be referred to as a medium access plan (MAP) and which will now be discussed in more detail, may be used. In embodiments, a dynamic assignment of TTS for US and DS is accomplished by broadcasting this special control message called Medium Access Plan (MAP). This message e.g. includes the value of US and DS TTS and potentially other associated parameters. For STDD, TTSs assigned for the same transmission direction in a particular superframe as explained are the same for all lines connected to the DP, although embodiments are not limited by this condition and allows setting of different TTS values for different lines. The MAP indicates what TTS assignment should be starting from the following superframe for a particular number of following superframes or until next assignment. In some embodiment, new TTS values may be used starting from the following frame, thus allowing superframes with different frames.

The MAP may be carried in one or more separate symbol, or on a specific set of sub-carriers, or multiplexed with data, or a combination of these methods. In all cases transmission of the MAP in embodiments is made robust, making sure that MAP is received in all lines; missing of the MAP may result in violation of the alignment between US and DS transmissions, which may cause NEXT and damage operation of the entire distribution. For reliability, the transmission parameters used to communicate MAP data, such as modulation, encoding, mapping, position in the frame, etc., are either fixed or pre-defined in some embodiments, so a CPE that eventually missed the MAP or even lost synchronization can recover MAP reception and synchronize its TTS with other CPEs. Methods of robust communication for the MAP which may be used include, but not limited, to protection using robust checksum, multiple repetitions, strong error correction, and others.

A case of a MAP 30 communicated in a separate symbol that follows the SS 22 is shown in Figure 3, in which a superframe 20 contains only one frame. In other embodiments, a superframe may contain more frames, e.g. three frames as in Fig. 2. The TTS assignment communicated in the MAP in an embodiment is valid starting from the following superframe. In other embodiments, the assignment of the new TTS may be starting from one or more superframes after the superframe the MAP is sent, or even inside the current frame/superframe (if the CPE operates fast enough to react on the proposed change).

Besides the TTS assignment, MAP in embodiments may also convey new assignment for the frame size and superframe size, and also new settings of transmission parameters for the current and the future transmissions. In case MAP is communicated in the first symbol, the transmission parameters may be applied to the same frame of the superframe. In case MAP is spread over the whole DS TTS, new parameter setting are available only at the end of the TTS and can be applied from the next following frame or superframe. If MAP is desired to be applied to transmission parameters of the current superframe, in embodiments it is confined into a separate symbol; after this symbol is passed, the following symbols (all or some, depending on MAP settings) can use assignment used in the MAP.

In addition, a MAP may also carry other relevant information related to the particular TTS, like acknowledgement, request for acknowledgement, or channel estimation information, or may also include generic information for all CPEs, such as transmit power limits, spectrum limits, and similar. However, in some embodiments MAP is only used for TTS assignment, while seamless adaptation of other parameters is facilitated by other management messages, communicates similarly to the MAP.

Adaptation of TTS assignment may for example be necessary when one or more lines intended to start services/applications that require more bandwidth in the DS or US than allowed by the current TTS (based on old services/applications used). A service/application request is usually coming from the CPE and a response from the Internet service provider (ISP) usually identifies a required bandwidth and Quality of Service (QoS) parameters. Based on these parameters and its currently available bit rate, the CPE (like CPE 17A or 17B of Fig. 1) may request the DP (like DP 11 of Fig. 1) for a particular TTS update, if the current TTS assignment does not allow it to comply with new service/application requirements. In another embodiment, a DP itself identifies a lack of downstream bandwidth (e.g., by monitoring its transmit data buffer) and may initiate a corresponding modification in TTS assignment. Similarly, a CPE may detects shortage of upstream bandwidth.

To accommodate the required new TTS setting, in a method, according to an embodiment, the following steps are performed:
1. The CPE communicates new service/application requirements (or an actual bandwidth request) to the DP or the DP itself detects a lack of downstream bandwidth;
2. The DP performs express analysis of the new requirements and identifies the TTS assignment to support it. If these required TTS assignments are different from the existing ones and available (e.g. physically possible), the DP launches a procedure for a seamless adaptation of TTS assignment:
   - the DP evaluates the existing TTS requirements and actual bandwidth utilization of all other lines (e.g. lines coupling the DP with other CPEs) and tries to come up with an assignment that either satisfies or is as close as possible to the requirements. This assignment may include a compromise solution when less important requirements in some lines are compromised to reach high-priority requirements in other lines. If at the end a suitable assignment (e.g. suitable partitioning of a frame between US and DS) does not exist, the DP informs the CPE that the request is denied; the CPE may repeat its request at later time or modify the request, if appropriate;
   - If DP finds a suitable assignment, it initiates the process to change the TTS assignment described below. This procedure in an embodiment is done simultaneously for all lines connected to the DP.

To modify the TTS, a DP broadcasts to all CPEs a MAP message with the values of the new TTS assignment (e.g. new values for M1 and M2). The MAP indicates at least:
- the new TTS assignment;
- the particular superframe (or frame inside a superframe) starting from which the new TTS shall apply (e.g. how many superframes/frames shall be skipped before the change);
- in an embodiment, the MAP with new assignment is further repeated in all superframes or frames till the one where the modification is due. An associated counter "number of superframes/frames left until the modification event" may be provided and updated in every transmitted MAP (this increases robustness of communications by sending MAP several times, each time reducing the frame counter, till 0);
- in an embodiment, the MAP continues to indicate the new assignment also after TTS is modified (with negative values of the counter of superframes/frames left until the modification event) to support CPEs that missed the transition (e.g., missed the MAP, temporary lost sync, or their reception was disabled by a long period of noise);
- the CPEs (like CPEs 17A, 17B) that received the MAP in an embodiment start a counter "number of superframes/frames left till modification" and get prepared to use modified TTS starting from the frame/superframe which is indicated in the MAP (count down every superframe passed and align their counter with the value of superframes/frames left till modification indicate in received MAPs);
- as the count gets to 0, in an embodiment both the DP and all CPE switch to the new TTS;
- in some embodiments the CPE may reports to the DP at the first opportunity that the required modification of TTS settings is executed (acknowledges the modification);
- If CPE didn't detect the MAP(s) and is uncertain about the TTS to be used, in an embodiment it skips transmissions to avoid distortions in other lines and turns into a receive-only mode, trying to receive a MAP during the following frames. (Keeping the size of the MAP fixed and transmission parameters of the MAP pre-defined improves robustness of this process. Besides, the TTS update in the MAP may be repeated after the frame in which the modification is executed as mentioned above to provide reference for CPEs that miss the MAP, as also mentioned above).

To avoid multiple negotiations between the DP and the CPEs on available bandwidth (which is a key for TTS assignments), in an embodiment the DP updates CPEs on the available overall bandwidth budget and indicates the computed potential bandwidth increase. The CPE may use this information to evaluate possible support of future applications/services and construct its future requests for TTS assignments. The CPEs, in turn, shall update the DP on their particular bandwidth utilization (which is needed for the DP to compute new TTS assignments).

In some embodiments, the receiver acknowledges reception of the MAP that includes TTS re-assignment request. This acknowledgement may be part of a management communication channel protocol. If one or more CPEs didn't acknowledge reception of the MAP that includes changes of the TTS, in some embodiments the DP may delay the re-assignment process by increasing the counter of the "superframes/frames left until the modification". Other methods may also apply. Multiple negative acknowledgements may cause the DP to further optimize MAP transmission parameters in the aim to improve robustness. These new parameters may be communicated the CPE by techniques that are similar to those explained above and below.

As mentioned above, such a MAP may be used for a seamless reassignment of TTS (for example increasing the number of DS data symbols while reducing the number of US data symbols or vice versa). Also, the size of frames or superframes (for example the number of frames per superframe) and/or transmission parameters may be adjusted in some embodiments. This will now be discussed in some more detail.

A typical scenario when adaptation of transmission parameters may become necessary is an unexpected increase of noise. Similar effects may occur in case when a transmitter reduces its power or channel transfer function changes due to changes in the loop configuration (e.g., a user at the CPE took the phone off-hook). In all these cases the receiver experience changes in signal-to-noise ratio (SNR) for one or more tones of the received OFDM or DMT signal and errors in the received data frames. In response, the receiver requests to retransmit errored frames and, in the aim to avoid errors in consequent frames, may request the transmitter to change the transmission parameters, such as bit loading, FEC code rate, or transmit power. In some embodiments, such a modification has to be done simultaneously or with only small time difference in multiple lines. Examples of such transmission parameters may include codeword length, bit loading, number of constellations used, transmit power etc.

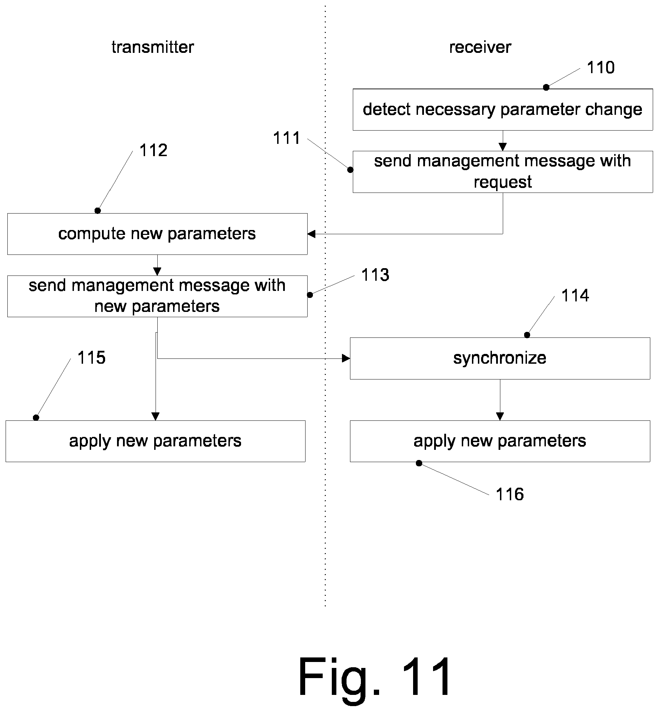

The management data communicated from the transmitter to the receiver includes a management message (may be implemented as described for the MAP message above) that indicates the set of new values of transmission parameters to be used by both the transmitter and the receiver starting from the particular superframe/frame. This set of parameters in an embodiment is determined by the transmitter, but may be based on the measurements or recommendations provided by the receiver. In one embodiment the following procedure, which is similar to one for TTS update, and which is schematically shown in Fig. 11 takes place:
- at 110, the receiver detects a necessary change in the transmission parameter(s) after one or more transmissions, e.g. due to a change of SNR;
- at 111, the receiver sends to the transmitter a robust management message at the first available time that informs the transmitter on the change in the SNR and/or about a specific parameters(s) values to be modified;
- at 112, the transmitter computes new values of transmission parameters (which are intended to satisfy the receiver, if possible, or be as close as possible to the requested values) ;
- at 113, the transmitter sends these new parameter values together with a number of frames after which the modification is due to the receiver e.g. at the first opportunity, e.g. using a robust management communication. The modified (new) set of parameters in an embodiment is further retransmitted in all following superframes/frames, and a counter that shows the number of superframes/frames left until modification event is due is updated in every transmission;
- at 114, the receiver synchronizes with the transmitter on the time to modify parameters (i.e. apply the new values) e.g., by using the "number of superframes/frames left till modification event" counter, and as this particular superframe/frame comes, both the transmitter (at 115) and the receiver (at 116) start transmission using a new set of parameters.

After a parameter change, the receiver may request an additional change. Similar to the case of TTS modification explained above, the management messages carrying sensitive data may be repeated for certain period of time after parameter modification was executed and/or acknowledged. The mentioned repetitions and acknowledgement enhance robustness of the protocol.

In another embodiment, the DP may not receive any update of the transmission parameters from the CPE, but see frequent data retransmission requests (no ACK) from one or more lines. Such retransmission requests may indicate that data was lost or corrupted and therefore needs to be retransmitted. This may indicate a decreased SNR or otherwise worsening line conditions. The DP may then decide to update transmission parameters on its own, e.g. by sending a "quick update" message, to adapt transmission parameters to the new line conditions. Since DP may have no specific details on channel characteristics, the DP can simply increase the noise margin by applying lower constellations (which is an example for a parameter change) respecting the same TTS assignment. To speed up parameter modification, the DP may send to this particular line a separate management message or a signal in the first transmitted symbol of the next available TTS indicating that "blind modification" of transmitted parameters is in place and indicate what exact parameters are modified or what pre-defined set of parameters is used. To indicate that, a special first symbol, e.g., a SS that includes special markers, such as tone inversion, special modulation patterns transmitted on specific tones, or similar, can be used. In some embodiments a change of some transmission parameters, such as constellation size or transmit power, can be detected by the receiver without knowledge from the transmitter. For example, reducing all constellation sizes by n bits on all subcarriers or increasing the transmit power by same value on all subcarriers can be easy detected by the receiver. If the constellation points of the modified constellation are a subset of the constellation points before the reconfiguration or converges to this subset, there is no need to reconfigure the demodulator in the aim to detect the new modulation.

In other embodiments, additionally or alternatively a frame size and/or a superframe size may be seamlessly changed by methods similar to the ones described above. In an embodiment, re-assignment of frame size (e.g. in symbols) and/or superframe size (e.g. the number of frames in a superframe) may be ordered by the DP. The re-assignment may be achieved by the following procedure:
- the DP determines the necessary change and broadcasts a request for this change to all the CPEs using e.g. a robust management channel; the communicated information includes the new value of the parameter (i.e., frame size or superframe size) and the number of superframes after which the modification shall be performed by both sides;
- the DP continues sending the request in all following superframes till the superframe modification shall take place with updated value of the superframes left till parameters modification;
- upon reception of the request, all CPEs setup a counter "number of superframes left till modification" as defined in the request and start counting superframes; the CPE updates the counter after each passed superframe and synchronizes it with the superframe count in the following requests;
- as counter reaches 0, the DP changes the DS TTS based in the new format or used new superframe size; all CPEs shall follow, and start counting their TTSs and superframe boundaries based on new rules.

In some cases, a seamless reconfiguration may also be needed for the management channel (MC) itself, which may use different settings than the data channel to improve robustness. In contrast to the reassignment of the data channel settings, the reassignment of the management channel settings has little impact on the system performance and can therefore be implemented to work slower but more reliable. To improve reliability and robustness of the re-assignment of the management channel settings, in embodiments the MC reassignment commands may be sent several times before the time is due to apply the changes. The number of retransmissions is pre-defined and therefore the link may get into fail state only after the receiver misses multiple retransmissions of the re-assignment command.
In one embodiment there are two different fail states:
- a failure of the management channel re-assignment;
- a failure of the data channel parameter re-assignment.

After a failure of the data channel, in an embodiment the data uplink is stopped to avoid unintended crosstalk to the other lines, while the uplink management channel is still kept operating to request a link reconfiguration to improve robustness and to transmit updated channel status information to the DP.

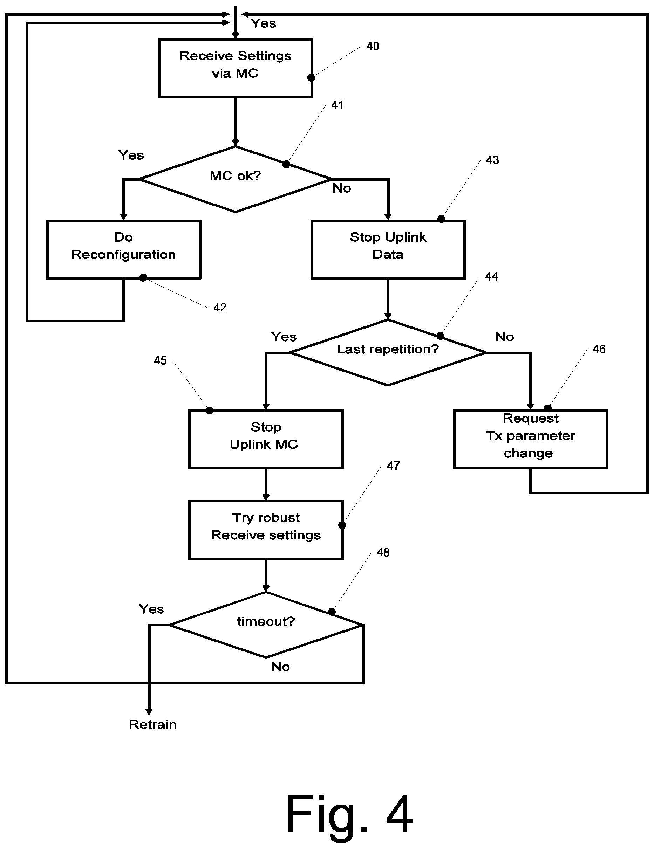

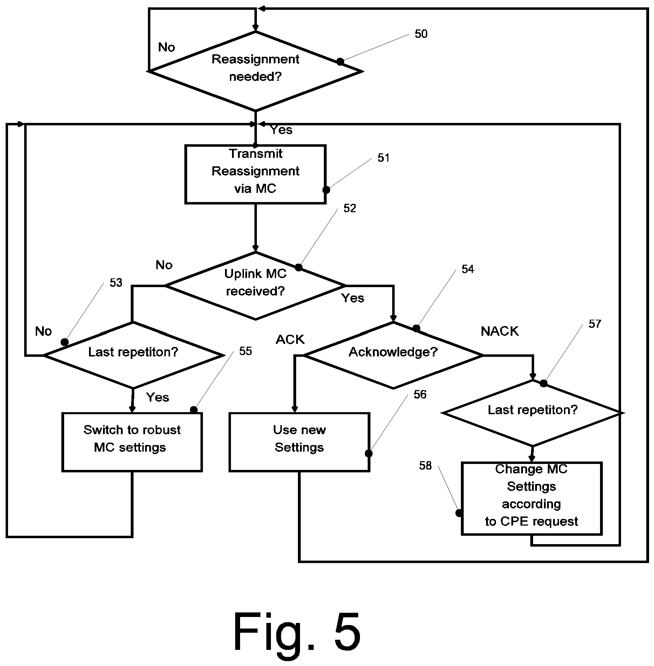

In Figs. 4 and 5, embodiments of methods for a fast reconfiguration procedure are shown, Fig. 4 showing a method which may be implemented for example for CPE reconfiguration, whereas Fig. 5 schematically shows a method which may be implemented on the DP according to an embodiment. It should be noted that while the methods are described as a series of acts or events, embodiments are not limited to the described series. For example, in other embodiments, some acts or events may be omitted, acts or events may be performed in a different order or concurrently with each other or additional acts or events may be implemented.

At 40 in Fig. 4, the CPE receives new settings via a management channel, for example new TTS settings (for example new distribution of M1 and M2), new transmission parameters, new frame or superframe size etc. The settings may for example be received via an MAP message as described above.

At 41, the CPE checks if the management channel is ok, for example using a checksum or other encoding. In other words, it is checked if the new settings were received correctly. If this is the case, at 42 the reconfiguration, i.e. the new settings, are applied. For example, as already explained, the new settings may be applied at a point in time (for example after a certain number of frames) indicated in the message which also contains the new setting.

After the reconfiguration has been performed at 42, the method is finished and may start again at 40 with new settings.

In case the management channel is not ok (No at 41), uplink data, i.e. transmission of data from the CPE, is stopped at 43 to avoid disturbing other lines due to wrong (for example outdated) parameters.

At 44, it is checked if the received settings were the last repetition, for example in a case as explained above where new settings are sent multiple times with a counter decreasing. If this is not the case, at 46 a parameter change is requested, for example to increase reliability of the management channel and ensure correct receipt of the parameter. If it was the last repetition, at 45 also the uplink management channel (management channel in the upstream direction) is stopped to avoid disturbances, and at 47 predetermined robust receive settings may be used in order to attempt to obtain new parameters. At 48, it is checked if a timeout has occurred, i.e. if no new management settings or other settings have been received using the robust receive settings for a certain predetermined time. As long as this is not the case, the method starts again at 49 to receive settings with the robust receive settings. If this is the case (Yes at 48), retrain of the link between DP and CPE is necessary, i.e. a partial or complete re-initialization of the link.

In Fig. 5, a corresponding method for the DP or other service unit is shown. At 50, it is checked if a reassignment is needed, i.e. the application of new settings for transmission parameters, TTS assignment, frame/superframe size or the like. As long as this is not the case, the method remains at 50. As explained, a reassignment may for example be requested by a CPE or may also be decided upon by DP for example based on the transmission request received. In case a reassignment is needed, at 51 the reassignment, i.e. the new settings, are transmitted via the management channel (for example to be received at 40 in Fig. 4). At 52, it is checked if a message from the CPE is received via the uplink management channel, i.e. the management channel from CPE to DP. If this is not the case, at 53 it is checked if it was the last transmission of the reassignment at 51 (in case of a plurality of transmissions prior to the change), and if not the reassignment is transmitted again at 51. In case it was the last repetition, at 55 a switch to predetermined robust management channel settings is made (corresponding to the robust setting at 47 in Fig. 4, for example), and the reassignment is transmitted again at 51 with these new settings.

In case the uplink management channel is received (Yes at 52), at 54 it is checked if an acknowledge (ACK) or a non-acknowledge (NACK) acknowledging or not acknowledging the reassignment transmitted at 51 was received. In case of an acknowledge at 56 the new settings are applied at the corresponding time, for example a time indicated in the message at 51 or a time when a counter reaches zero, as explained above. In case of a non-acknowledge, at 57 it is checked if it was the last repetition, and if this is the case the management channel settings are changed according to a request from the CPE at 58 (corresponding to the request made at 46). It should be noted that in other embodiments, as already mentioned, some of the acts, for example the sending of an acknowledgement, non-acknowledgement (which in Fig. 4 may be performed for example at 41) may be omitted.

In the following, various possibilities for increasing robustness of a system, for example an STDD system, will be discussed. Some of these embodiments are specifically usable for increasing a robustness of a management channel.

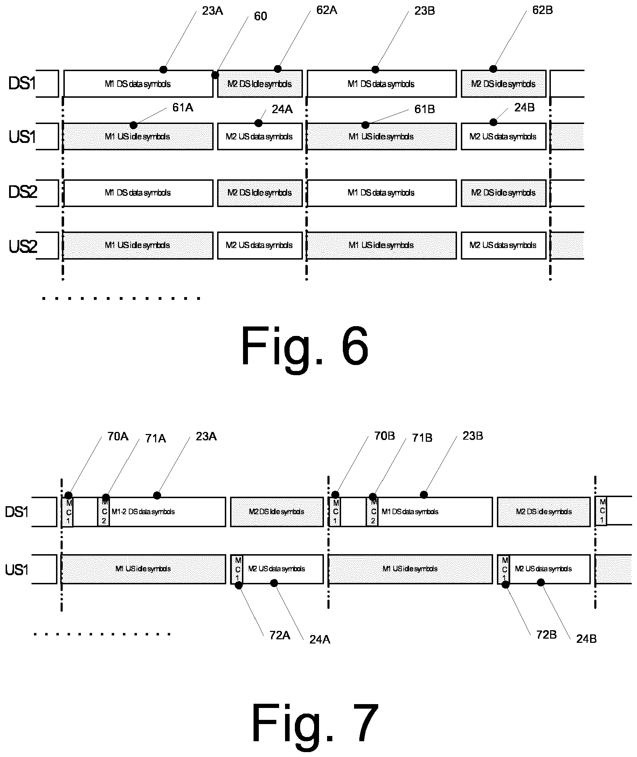

In Fig. 6, time slots for downstream and upstream transmission according to an embodiment are schematically shown for two lines, somewhat similar to the representation of Fig. 2. To provide a representation which is clearer for illustration of some aspects, downstream time slots where M1 downstream data symbols are transmitted (23A, 23B) are shown in a separate row from transmission time slot for upstream (24A, 24B). During transmission of downstream data symbols 23A, 23B, transmission in the upstream direction is represented by idle symbols (61A, 61B, respectively), i.e. no data transmission in upstream direction takes place. Conversely, during the transmission in upstream direction (24A, 24B), transmission in downstream direction is represented by idle symbols 62A and 62B, respectively.

Downstream and upstream directions for a first line are labeled DS1 and US1, respectively, and directions for a second line is labeled DS2, US2, respectively. It should be noted that the number of two lines is merely for representation, and any desired number of lines suitable for the respective application may be used.

In the embodiment of Fig. 6, guard times 60 are provided between upstream and downstream transmission. In some embodiments, providing such a guard time, coordination of upstream transmission and downstream transmission over various lines may be facilitated.

Next, various methods and techniques of organizing a management channel are presented. In some embodiments, besides providing capabilities for performance monitoring (PM) and generic command/control functions, such a management channel may also allow instant acknowledgement, modification of transmission parameters as explained above and temporal channel estimation (CE) feedback. In some embodiments, the management channel may be robust with a guaranteed protection against impulse noise and erasures in the frequency domain.

In some embodiments, the management channel may be organized in both US and DS direction in the same manner, so further just "management channel" (MC) will be used. The information communicated over the management channel may include at least some or all of the following components:
- Acknowledgement on one or more previous transmissions;
- Transmission parameters used in the current and/or future transmissions (to demodulate and decode the transmission);
- Formatting parameters (number and size of the codewords, number of dummy-bytes for padding, etc.);
- Medium Access Plan (MAP), that indicates the transmission time slots assigned for upstream and downstream.
- Information related to channel estimation (CE), such as SNR per sub-carrier during the last received transmission, or recommended set of coding/modulation parameters for the next transmission per sub-carrier, or updates crosstalk coupling parameters);
- Performance monitoring (PM) information;
- Time of the day and network timing reference (NTR) information;
- Other generic command/control information.

A number of embodiments define solutions for MC that are applicable in various cases. Combinations of these solutions are also considered as a part of the application in appropriate circumstances.

In one embodiment, a type of management channel uses one or more dedicated symbols during each transmission. For instance, if one downstream transmission includes 25 symbols, symbols #1 and #15 may be assigned for the MC. That also means no user data or any data other than MC may be transmitted during these symbols in some embodiments.

The distance between MC symbols is set so that impulse noise of maximum expected duration cannot erase both MC symbols. In one embodiment the first MC symbol is the first symbol of the transmission. This symbol may carry transmission parameters of data symbols of this same transmission. If it does, at least one symbol after the MC symbol should have pre-defined transmission parameters (e.g., defined in the standard or same as in previous transmission, etc.). This is helpful to provide a receiver with time to decode the MC symbol and apply the decoded transmission parameters to decode subsequent symbols. The second MC symbol may carry, fully or partially, the same information as the first MC, and mainly needed to protect against the case the first MC is erased.

In another embodiment MC symbols of a transmission carry transmission parameters of the following transmissions. In this case MC symbols may not duplicate each other, but carry one piece of management information encoded with high redundancy, so that erasure of one symbol will still allow recovering management data. In this embodiment MC symbols may carry also user data (partial MC symbols). For higher robustness, the number of MC bits in each symbol may be pre-defined: for instance, the first 10 bytes of the MC symbol belong to MC, others belong to the data.

The MC data may use very robust modulation and coding, which is significantly more reliable than one used for the data symbols. This includes, but not limited to use of forward error correction, repetition encoding, time domain and frequency domain interleaving. Highly-robust coding for MC allows its reception at very low (even negative) SNR. For further robustness, in another embodiment, the management data inside each transmission is protected by a robust checksum and an immediate acknowledgement (i.e., in the next transmission of the opposite direction) of received management data is used.

An example for the distribution of the management channel over dedicated symbols is schematically shown in Fig. 7 for a first transmission (DS1, US1). Other transmission lines may employ the same or different settings. In other words, while the TTS for upstream and downstream are coordinated, other parameters or settings for a management channel or data transmission may differ from line to line.

In the example of Fig. 7, in the upstream direction two symbols 70, 71 are assigned to the management channel (70A, 71A in TTS 23A and 70B, 71B in TTS 23B), and one symbol 72 (72A in TTS 24A and 72B in TTS 24B) are assigned to the management channel in the upstream direction. Other numbers and locations of symbols may also be used.

The number of MC symbols and their location is determined during initialization and can be adjusted using appropriate management protocol.

In one embodiment, the MC- dedicated symbols are aligned in all lines (e.g., the last symbol of the upstream TTS). This allows transmitting MC when all data symbols are turned off. This is helpful when due to the failure of the on-line reconfiguration procedure transmission of data channel shall be switched off to avoid disruption of other lines sourced by the DP.

In another embodiment, another type of management channel may be multiplexed with a data channel. The MC data may be divided into at least two groups. In case of two groups, the number of data bytes between these two groups is computed in the way that symbols that carry the bytes of each group will be separated by at least the time that will prevent erasure of both symbols by the impulse noise. The MC bits in each group may be encoded to allow higher robustness than data. The information carried by this type of MC may be encoded prior to be inserted into the data stream to provide higher robustness. This information will relate to the next transmission, while symbols of the current transmission will be decoded using information communicated in the MC channel of the previous transmission.

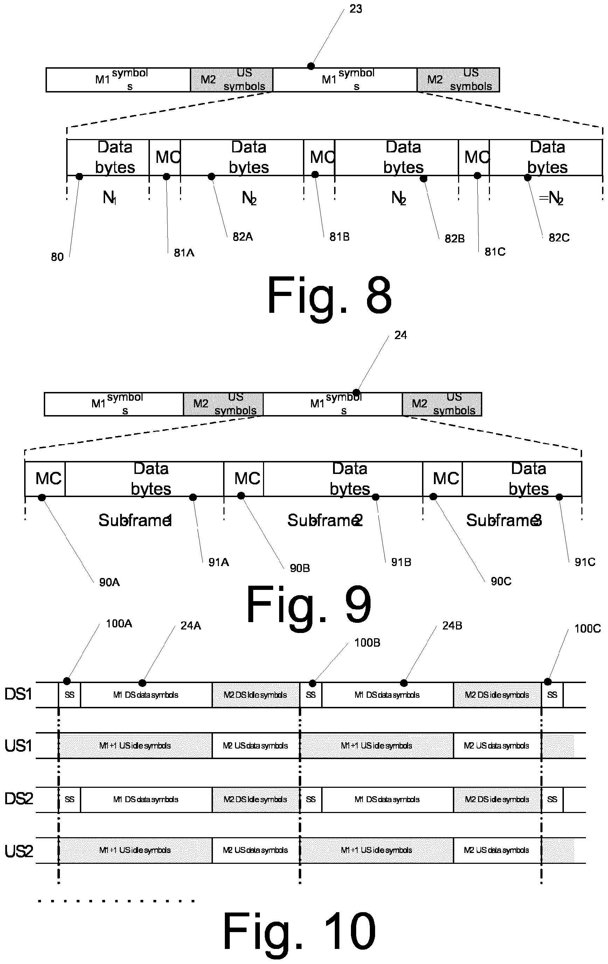

This approach, thus, provides additional delay, but is more efficient since does not require two complete symbols assigned for the MC. An example for this approach is illustrated in Figure 8; in the presented example the MC bytes 81A, 81B, 81C, respectively, are inserted N₁ bytes 80 after the start of the transmission and then after every N₂ bytes 82A, 82B, 82C, respectively, until the end of the transmission. This assignment may be repeated in all transmissions.

In one embodiment, the transmission may include several data sub-frames, so that decoding a sub-frame will allow the receiver also to decode the MC. In this embodiment, the management data communicated over MC may be available for the receiver during a part of this same transmission, which reduces the delay required for modification of transmission parameters to a fraction of the transmission time. One implementation is when one or more short management frames are interleaved with data frames; decoding of the first management frame allows applying the communicated management parameters in the following frames of the same transmission. This is illustrated in Figure 9; each sub-frame includes an MC header 90A, 90B or 90C and a body of data bytes 91A, 91B or 91C, respectively. The size of the MC header and the size of the sub-frame, except the last one, are pre-defined (either by a standard, or at initialization, or announced in previous transmissions). The last frame is Figure 9 is shortened to accommodate the given size of the TTS.

In an embodiment, the management channel may be implemented on dedicated tones of dedicated symbols. This approach may be more efficient than using of dedicated symbols and more robust, because tones with good SNR may be especially selected for MC during initialization and can be further updated using a corresponding OLR procedure. For higher robustness, the MC tones may be spaced; MC tones may also use conservative robust modulation, which may be pre-defined or determined during initialization. With this approach, different symbols may include different number of MC tones. In particular, the first symbol may include more tones, if it carries information related to decoding other symbols of the same transmission. If decoding of symbols in the current transmission is determined by management information of previous transmission, the tones of the MC may be distributed equally over all symbols of the transmission. This obviously results in higher robustness.

Selection of particular tones of particular symbols used for MC is determined during initialization and may be adjusted during the showtime using an appropriate management procedure. Tones selected for MC are usually those of high SNR. Symbols selected to carry MC tones are spaced sufficiently to avoid erasure of management data by the target longest impulse noise, for example as in Fig. 7.

Various patterns of MC tones assignment and symbol assignment may be used to simplify MC tone/symbol assignment protocol; in one embodiment tones of every next symbol of each particular transmission are shifted by *m* tones; other patterns can apply as well. In case of a particular tone/symbol patterns, only parameters of these patterns (e.g., {m, 2} for the used example) shall be communicated for adjustment of MC tones/symbols positions.

The information of the MC in all cases shall have substantially higher robustness than the data. Means like robust checksum, strong forward error correction, repetition encoding, and immediate acknowledgement described above, applied separately or in combination, are used in different embodiments.

With MC using dedicated tones, the MC can be transmitted when data channel is turned off (e.g., to avoid excessive crosstalk due to a failure of the on-line reconfiguration procedure).

In another embodiment, the management channel may be implemented on dedicated tones of sync symbols (SS). As already explained with reference to Fig. 2, the STDD transmission frames may include special predefined symbols for synchronization and channel estimation. They may be sent in downstream and upstream in order to adapt channel equalizers and recover symbol timing. The wireline channel is expected to change only slowly over time, therefore, the channel estimation update requires a low update frequency.

To avoid errors in channel estimation, the sync symbols may be sent with higher power and use robust coding and modulation. Furthermore, sync symbols are aligned for transmitters of all lines of a system with multiple transmitters. High robustness is also needed for the management channel. Therefore, the management overhead channel and the synchronization/channel estimation sequence may share one symbol. An example of an STDD system in Figure 10 shows the case in which sync symbols 100A, 100B, 100C are the first symbols of downstream transmissions (in the upstream direction no SS are sent and thus one of the other described methods is used for management channel), which SS 100A, 100B, 100C may have dedicated tones used for the management channel.

In one embodiment, bits of the management channel are modulated on dedicated tones of the sync symbol. To guarantee that the channel estimation has full coverage of the used frequency bands, the allocation of tones used for management channel and for channel estimation is changed according to a predefined rule from symbol to symbol.

In another embodiment, the management channel is embedded in the content of the SS as a separate block of highly protected data.

In some embodiments, the assignment of the management channel, for example the tones, symbols or positions within a data frame used, may be seamlessly adapted during data transmission.

A protocol for seamless re-allocation of MC according to an embodiment may contain the following steps:
- the receiver identifies a need in re-allocation of MC (move to different symbols, or to different tones, or to different position inside the data frame).
- the receiver communicates the new proposed allocation to the transmitter, indicating when the transition to this new allocation shall be made;
- the transmitter acknowledges the request and both transmitter and receiver prepare for transitioning of the first half of MC bearers (e.g., half of symbols or half of tones). The latter is necessary to avoid interruption of MC due to corrupted or lost acknowledgement.
- In some embodiments, both transmitter and receiver start counters of the frames/superframes left till the transition occurs (to synchronize on transmission in which MC settings at both sides of the line), similar to what has been explained above.
- after the first part of the MC transitions, the same is done with the second part.

Furthermore, also transmission parameters of the management channel may be changed, for example due to changes of signal-to-noise ratio or other changes in the noise environment. Similar approaches as for seamless adaptation of transmission parameter settings as already explained above in detail may be used. In other words, the seamless parameter adaptation procedure described above may also be applied to the management channel parameter settings. In case that the reconfiguration of data transmission parameters fails, it is desirable that the management channel stays in a working state to identify the parameters which are required to return the data channel to normal operation.

In one embodiment, to establish such a robust adaptive management channel, the DP changes the settings of the management channel parameters without informing the CPE when it notices that the CPE did not acknowledges reception of the downstream management channel data. This is done by predefined rules such that the CPE knows the required receiver parameter settings if it did not get acknowledgement on its upstream management channel data or if it did not receive the downlink management channel data, for example as explained with respect to Figs. 4 and 5 above where under specific circumstances a switch to predetermined robust settings occurred (47 in Fig. 4 and 55 in Fig. 5)..

In another embodiment the receiver at the CPE attempts to receive using different valid decoder and demodulator settings if it was unable to decode the management channel data. In this case, the transmitter may change the management channel settings on its own discretion.

In embodiments where the MC is arranged "per transmission", i.e., the upstream and downstream management channels are associated with corresponding transmissions in upstream and downstream, a data acknowledgement (e.g. as described with reference to Fig. 5) may also be conveyed over the MC. The required capacity expected to be provided. After getting acknowledgement of the transmission, the FTU sends a new frame or retransmits one or more segments of the previous frame that was received in error fully or partially.
If no acknowledgement received, the transmitter may request the receiver to repeat the ACK. Since MC also carrier CE info, the latter may also be lost. In this case, if MC is implemented using separate symbols or separate tones, the transmitter may also force the receiver into pre-defined coding and modulation mode, thus an eventual loss of CE info doesn't interrupt transmission.

While the application has been described in terms of a STDD system between a DP and CPE, the implementations described herein may be embodied or implemented using the following non-limiting technologies.

An exemplary communication arrangement may employ one, two or more multicarrier apparatuses or nodes. The exemplary communication arrangement may also employ a multicarrier controller apparatus or controller node. In one implementation, the multicarrier apparatuses/controller are Orthogonal Frequency Division Multiplexing (OFDM) apparatuses capable of implementing the herein described implementations.

One or more nodes may implement the embodiments described herein.

The multicarrier apparatuses may communicate through a communication channel. The communication channel may be realized as a wireless communication medium, a wireline communication medium (e.g. coaxial cable, twisted pair of copper wires, power line wiring, optical fiber, etc.), or combinations thereof. Accordingly, the multicarrier apparatuses, may include structure and functionality that enable signal communication over such medium. Such structure and functionality may include one or more antennas, integrated wireline interfaces, and the like. Depending on the implementation, the multicarrier apparatuses may communicate with one another directly (peer-to-peer mode) or the multicarrier apparatuses may communicate via the controller apparatus.

In one implementation, the exemplary communication arrangement may be a home network and the multicarrier controller apparatus may be an access point of the home network. For example, in the implementation the controller apparatus may be a residential gateway that distributes broadband services to the multicarrier apparatuses. The multicarrier apparatuses may be associated with digital content destinations in the home, but may also be associated with digital content sources, such as digital video recorders (DVR), computers providing streaming video, televisions, entertainment centres, and the like.

Furthermore, the multicarrier apparatuses may be enabled to communicate using packet-based technology (e.g. ITU G.hn, HomePNA, HomePlug® AV and Multimedia over Coax Alliance (MoCA)) and xDSL technology. Such xDSL technology may include Asymmetric Digital Subscriber Line (ADSL), ADSL2, ADSL2+, Very high Speed DSL (VDSL), VDSL2, G.Lite, and High bit rate Digital Subscriber Line (HDSL). In addition, the multicarrier apparatuses 102, 104 and 106 may be enabled to communicate using IEEE 802.11 and IEEE 802.16 (WiMAX) wireless technologies.

Signals exchanged between the multicarrier apparatuses may include multicarrier symbols that each include a plurality of tones or sub-channels. Each of the tones within a multicarrier symbol may have data bits modulated thereon that are intended for delivery from one of the multicarrier apparatuses to another.

An exemplary transceiver apparatus that may be used as a transmitting and receiving apparatus in a multicarrier arrangement or system is described in the following. The multicarrier apparatuses 102 may be implemented in the same or similar manner as the exemplary transceiver apparatus.

The transceiver apparatus may include a transmitter that incorporates a number of different elements. For example, the transmitter may include an encoder, a modulator, a filter, an interface and a controller. As used herein, the term "controller" is meant generally to include all types of digital processing devices including, without limitation, digital signal processors (DSPs), reduced instruction set computers (RISC), general-purpose (CISC) processors, microprocessors, gate arrays (e.g. FPGAs), PLDs, reconfigurable compute fabrics (RCFs), array processors, secure microprocessors, and application-specific integrated circuits (ASICs). Such digital processors may be contained on a single unitary IC die, or distributed across multiple components.

The encoder may be capable of receiving data that is for communication to a receiving device coupled to the transceiver apparatus via a wireless or wireline medium. More specifically, the encoder may be capable of translating incoming data bit streams into in-phase and quadrature components for each of the plurality of tones. The encoder may be arranged to output a number of symbol sequences that are equal to the number of tones available to the system. The modulator may be capable of receiving symbol sequences to produce a modulated signal in the form of a discrete multi-tone signal. The modulator may pass the modulated signal to the filter to undergo various filtering and then the filtered signal may be passed to the interface for communication over the medium to a receiving device.

The transceiver apparatus may also include a receiver that is capable of receiving modulated multi-tone signals communicated over the medium from a transmitting device. The receiver may include an interface, a filter, a demodulator, a decoder and a controller. Alternatively, the transceiver apparatus may implement a single controller, instead of the illustrated controllers. Signals received by the receiver may be passed to the filter via the interface. After received signals undergo filtering by way of the filter, the filtered signals may be demodulated by the demodulator. The demodulated signals may be passed to and processed by the decoder. The decoder produces data bit streams for consumption by a computing device, or the like. Effectively, the demodulator and the decoder perform the opposite functions of the modulator and the encoder, respectively.

Exemplary implementations discussed herein may have various components collocated; however, it is to be appreciated that the various components of the arrangement may be located at distant portions of a distributed network, such as a communications network and/or the Internet, or within a dedicated secure, unsecured and/or encrypted arrangement. Thus, it should be appreciated that the components of the arrangements may be combined into one or more apparatuses, such as a modem, are collocated on a particular node of a distributed network, such as a telecommunications network. Moreover, it should be understood that the components of the described arrangements may be arranged at any location within a distributed network without affecting the operation of the arrangements. For example, the various components can be located in a Central Office modem (CO, ATU-C, VTU-O), a Customer Premises modem (CPE, ATU-R, VTU-R), an xDSL management device, or some combination thereof. Similarly, one or more functional portions of the arrangement may be distributed between a modem and an associated computing device.

The above-described arrangements, apparatuses and methods may be implemented in a software module, a software and/or hardware testing module, a telecommunications test device, a DSL model, an ADSL modem, an xDSL modem, a VDSL modem, a linecard, a G.hn transceiver, a MOCA transceiver, a Homeplug transceiver, a powerline modem, a wired or wireless modem, test equipment, a multicarrier transceiver, a wired and/or wireless wide/local area network system, a satellite communication system, network-based communication systems, such as an IP, Ethernet or ATM system, a modem equipped with diagnostic capabilities, or the like, or on a separate programmed general purpose computer having a communications device or in conjunction with any of the following communications protocols: CDSL, ADSL2, ADSL2+, VDSL1, VDSL2, HDSL, DSL Lite, IDSL, RADSL, SDSL, UDSL, MOCA, G.hn, Homeplug or the like.

Additionally, the arrangements, procedures and protocols of the described implementations may be implemented on a special purpose computer, a programmed microprocessor or microcontroller and peripheral integrated circuit element(s), an ASIC or other integrated circuit, a digital signal processor, a flashable device, a hard-wired electronic or logic circuit such as discrete element circuit, a programmable logic device such as PLD, PLA, FPGA, PAL, a modem, a transmitter/receiver, any comparable device, or the like. In general, any apparatus capable of implementing a state machine that is in turn capable of implementing the methodology described and illustrated herein may be used to implement the various communication methods, protocols and techniques according to the implementations.

Furthermore, the disclosed procedures may be readily implemented in software using object or object-oriented software development environments that provide portable source code that can be used on a variety of computer or workstation platforms. Alternatively, the disclosed arrangements may be implemented partially or fully in hardware using standard logic circuits or VLSI design. The communication arrangements, procedures and protocols described and illustrated herein may be readily implemented in hardware and/or software using any known or later developed systems or structures, devices and/or software by those of ordinary skill in the applicable art from the functional description provided herein and with a general basic knowledge of the computer and telecommunications arts.

Moreover, the disclosed procedures may be readily implemented in software that can be stored on a computer-readable storage medium, executed on programmed general-purpose computer with the cooperation of a controller and memory, a special purpose computer, a microprocessor, or the like. In these instances, the arrangements and procedures of the described implementations may be implemented as program embedded on personal computer such as an applet, JAVA® or CGI script, as a resource residing on a server or computer workstation, as a routine embedded in a dedicated communication arrangement or arrangement component, or the like. The arrangements may also be implemented by physically incorporating the arrangements and/or procedures into a software and/or hardware system, such as the hardware and software systems of a test/modelling device.

## Claims

1. A method, comprising:
defining a management message (30; 70A, 71A, 72A; 81; 90; 100) to include transmission settings for use by at least one of a communication transmitter (11) and receiver (17A, 17B) starting from a particular superframe (20) or frame, said transmission settings comprising an adaptive assignment of transmission time slots (23, 24) between an upstream direction and a downstream direction; and
transmitting the management message (30; 70A, 71A, 72A; 81; 90; 100) in at least one of a number of frames in a superframe (20) using at least one communication connection of a synchronized time-division duplex system,
further comprising repeating said transmitting of said management message (30; 70A, 71A, 72A; 81; 90; 100) until the particular superframe (20) or frame, and
decreasing a counter with each transmission, and applying the transmission settings when said counter reaches 0.

2. The method of claim 1, wherein the counter is transmitted in the management message.

3. The method of any one of claims 1 or 2, further comprising repeating said transmitting of said management message (30; 70A, 71A, 72A; 81; 90; 100) after said particular superframe or frame.

4. The method of any one of claims 1-3, further comprising receiving a message (30; 70A, 71A, 72A; 81; 90; 100) confirming receipt of the management message.

5. The method of any one of claims 1-4, further comprising receiving a request for updated transmission settings, and defining the management message (30; 70A, 71A, 72A; 81; 90; 100) in response to the request.

6. A method, comprising:
receiving a management message (30; 70A, 71A, 72A; 81; 90; 100) in at least one of a number of frames in a superframe (20) using a communication connection of a synchronized time-division duplex system,
said management message (30; 70A, 71A, 72A; 81; 90; 100) including transmission settings for use by at least one of a communication transmitter and receiver starting from a particular superframe (20) or frame, said transmission settings comprising an adaptive assignment of transmission time slots (23, 24) between an upstream direction and a downstream direction,
further comprising repeating said receiving of said management message (30; 70A, 71A, 72A; 81; 90; 100) until the particular superframe (20) or frame,
wherein a counter is decreased with each reception, and wherein the method comprises applying the transmission settings when said counter reaches 0.

7. The method of claim 6, wherein the counter is received in the management message.

8. The method of claim 6 or 7, further comprising transmitting a message confirming receipt of the management message.

9. The method of any one of claims 1-8, wherein said transmission settings comprise at least one of a frame size or a superframe size.

10. The method of any one of claims 1-9, wherein said management message (30; 70A, 71A, 72A; 81; 90; 100) is provided for a plurality of lines between a service unit (11) and customer premises equipment (17A, 17B).

11. The method of any one of claims 1-10, wherein said transmission settings comprise transmission parameters.

12. The method of any one of claims 1-11, wherein the management message (30; 70A, 71A, 72A; 81; 90; 100) is encoded over at least two symbols of a frame, is interleaved with data, provided on specific tones of specific symbols or included in a synchronization symbol (100).

13. An apparatus (11), comprising:
a processor (14A, 14B) configured to define a management message (30; 70A, 71A, 72A; 81; 90; 100) to include transmission settings for use by at least one of a communication transmitter (11) and receiver (17A, 17B) starting from a particular superframe (20) or frame, said transmission settings comprising an adaptive assignment of transmission time slots (23, 24) between an upstream direction and a downstream direction; and
a transmitter (15, 16) configured to transmit said management message (30; 70A, 71A, 72A; 81; 90; 100) in at least one of a number of frames in a superframe (20) using at least one communication connection of a synchronized time-division duplex system,
wherein the transmitter is configured to repeat said transmitting of said management message (30; 70A, 71A, 72A; 81; 90; 100) until the particular superframe (20) or frame, and the apparatus is configured to decrease a counter with each transmission and to apply the transmission settings when said counter reaches 0.

14. An apparatus (17), comprising a receiver configured to receive a management message (30; 70A, 71A, 72A; 81; 90; 100) in at least one of a number of frames in a superframe using at least one communication connection of a synchronized time-division duplex system, said management message (30; 70A, 71A, 72A; 81; 90; 100) including transmission settings for use at least one of a communication transmitter and receiver starting from a particular superframe (20) or frame, said transmission settings comprising an adaptive assignment of transmission time slots (23, 24) between an upstream direction and a downstream direction,
wherein the receiver is configured to repeat said receiving of said management message (30; 70A, 71A, 72A; 81; 90; 100) until the particular superframe (20) or frame, wherein a counter is decreased with each reception, wherein the apparatus is configured to apply the transmission settings when the counter reaches 0.

## Patentansprüche

1. Verfahren, umfassend:
Definieren einer Verwaltungsnachricht (30; 70A, 71A, 72A; 81; 90; 100) zum Aufnehmen von Übertragungseinstellungen zur Verwendung durch mindestens einen eines Kommunikationssenders (11) und -empfängers (17A, 17B) ausgehend von einem bestimmten Superrahmen (20) oder Rahmen, wobei die Übertragungseinstellungen eine adaptive Zuordnung von Übertragungszeitschlitzen (23, 24) zwischen einer stromaufwärtigen Richtung und einer stromabwärtigen Richtung aufweisen; und
Senden der Verwaltungsnachricht (30; 70A, 71A, 72A; 81; 90; 100) in mindestens einem einer Anzahl an Rahmen in einem Superrahmen (20) unter Verwendung mindestens einer Kommunikationsverbindung eines synchronisierten Zeitduplexsystems,
ferner umfassend das Wiederholen des Übertragens der Verwaltungsnachricht (30; 70A, 71A, 72A; 81; 90; 100) bis zu dem bestimmten Superrahmen (20) oder Rahmen und
Verringern eines Zählers mit jeder Übertragung und Anwenden der Übertragungseinstellungen, wenn der Zähler 0 erreicht.

2. Verfahren nach Anspruch 1, wobei der Zähler in der Verwaltungsnachricht übertragen wird.

3. Verfahren nach einem der Ansprüche 1 oder 2, ferner umfassend das Wiederholen des Übertragens der Verwaltungsnachricht (30; 70A, 71A, 72A; 81; 90; 100) nach dem bestimmten Superrahmen oder Rahmen.

4. Verfahren nach einem der Ansprüche 1 - 3, ferner umfassend das Empfangen einer Nachricht (30; 70A, 71A, 72A; 81; 90; 100) unter Bestätigen des Empfangs der Verwaltungsnachricht.

5. Verfahren nach einem der Ansprüche 1 - 4, ferner umfassend das Erhalten einer Anfrage bezüglich aktualisierter Übertragungseinstellungen und Definieren der Verwaltungsnachricht (30; 70A, 71A, 72A; 81; 90; 100) als Reaktion auf die Anfrage.

6. Verfahren, umfassend:
Empfangen einer Verwaltungsnachricht (30; 70A, 71A, 72A; 81; 90; 100) in mindestens einem einer Anzahl an Rahmen in einem Superrahmen (20) unter Verwendung einer Kommunikationsverbindung eines synchronisierten Zeitduplexsystems,
wobei die Verwaltungsnachricht (30; 70A, 71A, 72A; 81; 90; 100) Übertragungseinstellungen zur Verwendung durch mindestens einen eines Kommunikationssenders und -empfängers ausgehend von einem bestimmten Superrahmen (20) oder Rahmen beinhaltet, wobei die Übertragungseinstellungen eine adaptive Zuordnung von Übertragungszeitschlitzen (23, 24) zwischen einer stromaufwärtigen Richtung und einer stromabwärtigen Richtung aufweisen,
ferner umfassend das Wiederholen des Empfangens der Verwaltungsnachricht (30; 70A, 71A, 72A; 81; 90; 100) bis zu dem bestimmten Superrahmen (20) oder Rahmen,
wobei ein Zähler mit jedem Empfang verringert wird, und wobei das Verfahren das Anwenden der Übertragungseinstellungen, wenn der Zähler 0 erreicht, umfasst.

7. Verfahren nach Anspruch 6, wobei der Zähler in der Verwaltungsnachricht erhalten wird.

8. Verfahren nach Anspruch 6 oder 7, ferner umfassend das Übertragen einer Nachricht unter Bestätigen des Empfangs der Verwaltungsnachricht.

9. Verfahren nach einem der Ansprüche 1 - 8, wobei die Übertragungseinstellungen mindestens eine einer Rahmengröße oder einer Superrahmengröße aufweisen.

10. Verfahren nach einem der Ansprüche 1 - 9, wobei die Verwaltungsnachricht (30; 70A, 71A, 72A; 81; 90; 100) für mehrere Leitungen zwischen einer Diensteinheit (11) und Kundenendgeräten (17A, 17B) bereitgestellt wird.

11. Verfahren nach einem der Ansprüche 1 - 10, wobei die Übertragungseinstellungen Übertragungsparameter aufweisen.

12. Verfahren nach einem der Ansprüche 1 - 11, wobei die Verwaltungsnachricht (30; 70A, 71A, 72A; 81; 90; 100) über mindestens zwei Symbole eines Rahmens codiert wird, mit Daten verschachtelt wird, auf spezifischen Tönen von spezifischen Symbolen bereitgestellt wird oder in einem Synchronisationssymbol (100) aufgenommen wird.

13. Vorrichtung (11), die Folgendes aufweist:
einen Prozessor (14A, 14B), der konfiguriert ist, um eine Verwaltungsnachricht (30; 70A, 71A, 72A; 81; 90; 100) zu definieren, um Übertragungseinstellungen zur Verwendung durch mindestens einen eines Kommunikationssenders (11) und -empfängers (17A, 17B) ausgehend von einem bestimmten Superrahmen (20) oder Rahmen aufzunehmen, wobei die Übertragungseinstellungen eine adaptive Zuordnung von Übertragungszeitschlitzen (23, 24) zwischen einer stromaufwärtigen Richtung und einer stromabwärtigen Richtung aufweisen; und
einen Sender (15, 16), der konfiguriert ist, um die Verwaltungsnachricht (30; 70A, 71A, 72A; 81; 90; 100) in mindestens einem einer Anzahl an Rahmen in einem Superrahmen (20) unter Verwendung mindestens einer Kommunikationsverbindung eines synchronisierten Zeitduplexsystems zu senden,
wobei der Sender konfiguriert ist, um das Senden der Verwaltungsnachricht (30; 70A, 71A, 72A; 81; 90; 100) bis zu dem bestimmten Superrahmen (20) oder Rahmen zu wiederholen, und die Vorrichtung konfiguriert ist, um einen Zähler mit jedem Senden zu verringern und die Sendeeinstellungen anzuwenden, wenn der Zähler 0 erreicht.

14. Vorrichtung (17), die einen Empfänger aufweist, der konfiguriert ist, um eine Verwaltungsnachricht (30; 70A, 71A, 72A; 81; 90; 100) in mindestens einem einer Anzahl an Rahmen in einem Superrahmen unter Verwendung mindestens einer Kommunikationsverbindung eines synchronisierten Zeitduplexsystems zu empfangen, wobei die Verwaltungsnachricht (30; 70A, 71A, 72A; 81; 90; 100) Übertragungseinstellungen zur Verwendung mindestens eines eines Kommunikationssenders und -empfängers ausgehend von einem bestimmten Superrahmen (20) oder Rahmen beinhaltet, wobei die Übertragungseinstellungen eine adaptive Zuordnung von Übertragungszeitschlitzen (23, 24) zwischen einer stromaufwärtigen Richtung und einer stromabwärtigen Richtung aufweisen,
wobei der Empfänger konfiguriert ist, um das Empfangen der Verwaltungsnachricht (30; 70A, 71A, 72A; 81; 90; 100) bis zu dem bestimmten Superrahmen (20) oder Rahmen zu wiederholen, wobei ein Zähler mit jedem Empfang verringert wird, wobei die Vorrichtung konfiguriert ist, um die Übertragungseinstellungen anzuwenden, wenn der Zähler 0 erreicht.

## Revendications

1. Procédé comprenant :
la définition d'un message de gestion (30 ; 70A, 71A, 72A ; 81 ; 90 ; 100) pour inclure des réglages de transmission destinés à être utilisés par au moins l'un d'un émetteur de communication (11) et d'un récepteur (17A, 17B) à partir d'une supertrame (20) ou trame particulière, lesdits réglages de transmission comprenant une attribution adaptative de créneaux temporels de transmission (23, 24) entre une direction amont et une direction aval ; et
la transmission du message de gestion (30 ; 70A, 71A, 72A ; 81 ; 90 ; 100) dans au moins une trame d'un certain nombre de trames dans une supertrame (20) à l'aide d'au moins une connexion de communication d'un système à duplexage par répartition dans le temps synchronisé,
comprenant en outre, la répétition de ladite transmission dudit message de gestion (30 ; 70A, 71A, 72A ; 81 ; 90 ; 100) jusqu'à la supertrame (20) ou trame particulière, et
la réduction d'un compteur à chaque transmission, et l'application des réglages de transmission lorsque ledit compteur atteint 0.

2. Procédé selon la revendication 1, le compteur étant transmis dans le message de gestion.

3. Procédé selon l'une quelconque des revendications 1 ou 2, comprenant en outre la répétition de ladite transmission dudit message de gestion (30 ; 70A, 71A, 72A ; 81 ; 90 ; 100) après ladite supertrame ou trame particulière.

4. Procédé selon l'une quelconque des revendications 1 à 3, comprenant en outre la réception d'un message (30 ; 70A, 71A, 72A ; 81 ; 90 ; 100) confirmant la réception du message de gestion.

5. Procédé selon l'une quelconque des revendications 1 à 4, comprenant en outre la réception d'une requête pour des réglages de transmission mis à jour, et
la définition du message de gestion (30 ; 70A, 71A, 72A ; 81 ; 90 ; 100) en réponse à la requête.

6. Procédé comprenant :
la réception d'un message de gestion (30 ; 70A, 71A, 72A ; 81 ; 90 ; 100) dans au moins une trame d'un certain nombre de trames dans une supertrame (20) à l'aide d'une connexion de communication d'un système à duplexage par répartition dans le temps synchronisé,
ledit message de gestion (30 ; 70A, 71A, 72A ; 81 ; 90 ; 100) incluant des réglages de transmission destinés à être utilisés par au moins l'un d'un émetteur et d'un récepteur de communication à partir d'une supertrame (20) ou trame particulière, lesdits réglages de transmission comprenant une attribution adaptative de créneaux temporels de transmission (23, 24) entre une direction amont et une direction aval,
comprenant en outre, la répétition de ladite réception dudit message de gestion (30 ; 70A, 71A, 72A ; 81 ; 90 ; 100) jusqu'à la supertrame (20) ou trame particulière,
un compteur étant diminué à chaque réception, et le procédé comprenant l'application des réglages de transmission lorsque ledit compteur atteint 0.

7. Procédé selon la revendication 6, le compteur étant reçu dans le message de gestion.

8. Procédé selon la revendication 6 ou 7, comprenant en outre la transmission d'un message confirmant la réception du message de gestion.

9. Procédé selon l'une quelconque des revendications 1 à 8, lesdits réglages de transmission comprenant au moins l'une d'une taille de trame ou d'une taille de supertrame.

10. Procédé selon l'une quelconque des revendications 1 à 9, ledit message de gestion (30 ; 70A, 71A, 72A ; 81 ; 90 ; 100) étant fourni pour une pluralité de lignes entre une unité de service (11) et un équipement de locaux d'abonné (17A, 17B).

11. Procédé selon l'une quelconque des revendications 1 à 10, lesdits réglages de transmission comprenant des paramètres de transmission.

12. Procédé selon l'une quelconque des revendications 1 à 11, le message de gestion (30 ; 70A, 71A, 72A ; 81 ; 90 ; 100) étant codé sur au moins deux symboles d'une trame, étant entrelacé avec des données, fourni sur des tonalités spécifiques de symboles spécifiques ou inclus dans un symbole de synchronisation (100).

13. Appareil (11) comprenant :
un processeur (14A, 14B) configuré pour définir un message de gestion (30 ; 70A, 71A, 72A ; 81 ; 90 ; 100) pour inclure des réglages de transmission destinés à être utilisés par au moins l'un d'un émetteur de communication (11) et d'un récepteur (17A, 17B) à partir d'une supertrame (20) ou trame particulière, lesdits réglages de transmission comprenant une attribution adaptative de créneaux temporels de transmission (23, 24) entre une direction amont et une direction aval ; et
un émetteur (15, 16) configuré pour transmettre ledit message de gestion (30 ; 70A, 71A, 72A ; 81 ; 90 ; 100) dans au moins une trame d'un certain nombre de trames dans une supertrame (20) à l'aide d'au moins une connexion de communication d'un système à duplexage par répartition dans le temps synchronisé,
l'émetteur étant configuré pour répéter ladite transmission dudit message de gestion (30 ; 70A, 71A, 72A ; 81 ; 90 ; 100) jusqu'à la supertrame (20) ou trame particulière, et l'appareil étant configuré pour diminuer un compteur à chaque transmission et pour appliquer les réglages de transmission lorsque ledit compteur atteint 0.

14. Appareil (17), comprenant un récepteur configuré pour recevoir un message de gestion (30 ; 70A, 71A, 72A ; 81 ; 90 ; 100) dans au moins une trame d'un certain nombre de trames dans une supertrame à l'aide d'au moins une connexion de communication d'un système de duplexage par répartition dans le temps synchronisé, ledit message de gestion (30 ; 70A, 71A, 72A ; 81 ; 90 ; 100) incluant des réglages de transmission pour utiliser au moins l'un d'un émetteur et d'un récepteur de communication à partir d'une supertrame (20) ou trame particulière, lesdits réglages de transmission comprenant une attribution adaptative de créneaux temporels de transmission (23, 24) entre une direction amont et une direction aval,
le récepteur étant configuré pour répéter ladite réception dudit message de gestion (30 ; 70A, 71A, 72A ; 81 ; 90 ; 100) jusqu'à la supertrame (20) ou trame particulière, un compteur étant diminué à chaque réception, l'appareil étant configuré pour appliquer les réglages de transmission lorsque le compteur atteint 0.
